# EUROPEAN PATENT APPLICATION

(11) **EP 3 988 712 A1**
(43) Date of publication of application: **27.04.2022**
(21) Application number: 21204092.7
(22) Date of filing: 22.10.2021
(51) Int. Cl.: D06P 5/30, C09D 11/30

(54) **INKJET TEXTILE PRINTING INK AND IMAGE FORMING METHOD**

(30) Priority: 26.10.2020 JP 2020179022
(71) Applicant: KONICA MINOLTA, INC., Tokyo 100-7015 (JP)
(72) Inventor: Nakamura, Masaki, Tokyo, 191-8511 (JP); Nito, Ken, Tokyo, 100-7015 (JP); Okada, Takuya, Tokyo, 100-7015 (JP); Suzuki, Keishi, Tokyo, 100-7015 (JP)
(74) Representative: Gille Hrabal Partnerschaftsgesellschaft mbB Patentanwälte

(57) **Abstract**

An inkjet textile printing ink of the present invention contains a pigment, a polymer particle having a glass transition temperature of 50°C or higher, and water, and the ratio M2/M1 between the pigment content M1 and the polymer particle content M2 is 3 to 19 at mass ratio.

## Description

### BACKGROUND OF THE INVENTION

### 1. Field of the Invention

The present invention relates to an inkjet textile printing ink and an image forming method.

### 2. Description of Related Art

As a conventional textile printing method, for example, exhaustion printing in which a fabric is immersed in a bath filled with a dye to perform textile printing is known, but the production efficiency is low because of a long time required for dyeing. In recent years, an inkjet method that forms image on a fabric (known as inkjet textile printing) is widely used for image formation on a fabric because of a short dyeing time and high production efficiency.

In the inkjet textile printing, minute droplets of ink are ejected from an inkjet recording head and landed on a fabric to form an image. Dye inks are known as inks to be used in inkjet textile printing (inkjet textile printing ink). For fabrics including cotton, rayon fibers, or hemp fibers, for example, inks containing reactive dyes are known.

In a dye ink, the dye dissolves in or reacts with the fibers of a fabric, thus an image with high fastness without losing the texture of the fibers can be readily formed. However, a washing process is required to wash away the undissolved or unreacted dye, thus it is desirable that such a process be omitted from the viewpoint of further increasing production efficiency.

On the other hand, pigment inks suitable for inkjet textile printing are also being studied. For example, a pigment textile inkjet ink composition containing a pigment, urethane resin particles, a surfactant, and water is known (see, for example, Japanese Patent Application Laid-Open No. 2019-163397). The reference teaches in the Examples thereof that the content of urethane resin particles in the ink composition is 1.5 or less with respect to the content of the pigment.

A colorant composition, for preventing see-through of fabric, containing a pigment, a polymer particle dispersion having a Tg of 20°C or lower, and water is also known (see, for example, Japanese Patent Application Laid-Open No. 2008-133461). This reference teaches that after applying the colorant composition to the back surface of a fabric, the solvent is evaporated and the polymer particles form a coating film to fix the pigment to the fabric together with the polymer particles.

However, when an ink having a relatively low content of resin particles as described in Japanese Patent Application Laid-Open No. 2019-163397 is applied onto a fabric, the density of the obtained image is low and color reproducibility cannot be obtained.

The colorant composition of Japanese Patent Application Laid-Open No. 2008-133461 contains polymer particles having a low Tg, and thus when the colorant composition applied to a fabric is dried, it is more likely that the polymer particles form a coating film and the fibers adhere to each other. As a result, the obtained image-formed product (product on which an image is formed) is more likely to become hard, and the texture of the fabric is more likely to be impaired.

The present invention has been made in the view of the above situations, and an object of the present invention is to provide an inkjet textile printing ink and an image forming method that uses the inkjet textile printing ink capable of forming an image having sufficient density without impairing the texture of the fabric.

### SUMMARY OF THE INVENTION

The present invention relates to an inkjet textile printing ink and an image forming method as follows.

To achieve at least one of the abovementioned objects, according to an aspect of the present invention, an inkjet textile printing ink reflecting one aspect of the present invention contains a pigment, a polymer particle having a glass transition temperature (Tg) of 50°C or higher, and water, and the ratio M2/M1 between the content M1 of the pigment and the content M2 of the polymer particle is 3 to 19 at mass ratio.

To achieve at least one of the abovementioned objects, according to an aspect of the present invention, an image forming method reflecting one aspect of the present invention includes applying a droplet of the inkjet textile printing ink of the present invention to a fabric by an inkjet method.

### Advantageous Effects of Invention

The present invention provides an inkjet textile printing ink and an image forming method that uses the inkjet textile printing ink capable of forming an image having sufficient density without impairing the texture of a fabric.

### BRIEF DESCRIPTION OF DRAWING

The advantages and features provided by one or more embodiments of the invention will become more fully understood from the detailed description given hereinbelow and the appended drawings which are given by way of illustration only, and thus are not intended as a definition of the limits of the present invention:

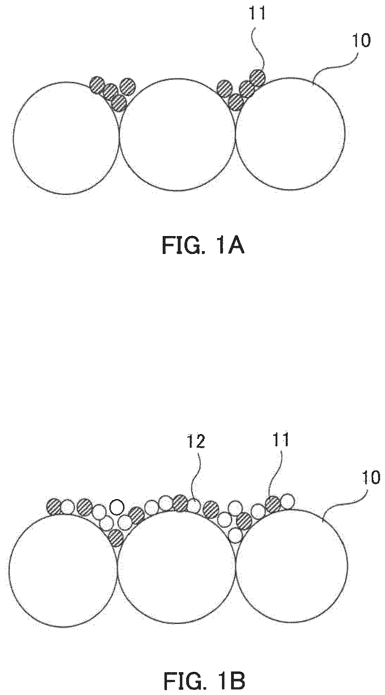

FIG. 1A is a cross-sectional view showing an image of the adhesion state of an conventional ink in the periphery of the surface of a fabric when the ink is applied to the fabric; and
FIG. 1B is a cross-sectional view showing an image of the adhesion state of an ink of the present invention in the periphery of the surface of a fabric when the ink is applied to the fabric.

### DESCRIPTION OF THE PREFERRED EMBODIMENTS

Hereinafter, one or more embodiments of the present invention will be described with reference to the drawings. However, the scope of the invention is not limited to the disclosed embodiments.

The present inventors have found that an image having a high density can be formed without impairing the texture of the fabric by setting the Tg of the polymer particles contained in a pigment ink to 50°C or higher and suitably increasing the content M2 of the polymer particles with respect to the content M1 of the pigment. The reason for this is not clear, but it is presumed as follows.

FIG. 1A is a cross-sectional view showing an image of the adhesion state of an conventional ink in the periphery of the surface of a fabric when the ink is applied to the fabric; and FIG. 1B is a cross-sectional view showing an image of the adhesion state of an ink of the present invention in the periphery of the surface of a fabric when the ink is applied to the fabric. In FIG. 1A, an ink containing no polymer particle is used as an example of the conventional ink.

When the conventional pigment ink containing no polymer particle or having relatively low polymer particle content is applied to the surface of the fabric, pigment particles 11 are more likely to gather in the gap between fibers 10 due to capillary action during drying of the ink, and pigment particles 11 are less present on the surface of fibers 10 (see FIG. 1A). Therefore, the obtained image is more likely to show the ground color of fibers 10 and less likely to increase the optical density (image density) of pigment particles 11.

The pigment ink of the present invention contains a suitable large amount of polymer particles 12 in addition to pigment particles 11. When such a pigment ink is applied to the surface of a fabric, polymer particles 12 suitably gather in the gap between fibers 10 during drying of the ink, thus reducing the ratio of pigment particles 11 that gather in the gap between fibers 10 (see FIG. 1B). As a result, pigment particles 11 are more likely to be distributed on the surface of fibers 10, thus the ground color of fibers 10 becomes less noticeable, and the optical density (image density) of pigment particles 11 is more likely to increase.

In addition, as pigment particles 11 usually have a high refractive index, densely packed pigment particles 11 in a specific area as in the convenient art would increase light reflection on the surface of pigment particles 11 in the densely packed area, thereby making colors appear duller. The use of the pigment ink of the present invention can lower the concentration of pigment particles 11 per volume, and reduce the light reflection per volume, thus colors are less likely to appear dull and beautiful colors can be reproduced.

When the Tg of polymer particles 12 is equals to or lower than 20°C as in Japanese Patent Application Laid-Open No. 2019-163397, the obtained image-formed product is more likely to become hard because polymer particles 12 fuse to form a film during drying of the ink, causing adhesion of fibers 10 to each other. As polymer particles 12 in the pigment ink of the present invention has a higher Tg of 50°C or higher, polymer particles 12 are less likely to fuse each other to form a film during drying of the ink. Thereby, fibers 10 are less likely to adhere to each other, and thus the obtained image-formed product is less likely to become hard and the texture of the fabric is less likely to be impaired. Hereinafter, the configuration of an ink of the present invention will be described.

### 1. Inkjet Textile Printing Ink

The inkjet textile printing ink contains a pigment, at least one polymer particle, and water.

### 1-1. Pigment

The pigment may be any one of, for example, organic pigments and inorganic pigments having the following numbers listed in the Color Index.

Examples of orange or yellow pigments include C.I. Pigment Orange 31, C.I. Pigment Orange 43, C.I. Pigment Yellow 12, C.I. Pigment Yellow 13, C.I. Pigment Yellow 14, C.I. Pigment Yellow 15, C.I. Pigment Yellow 17, C.I. Pigment Yellow 74, C.I. Pigment Yellow 83, C.I. Pigment Yellow 93, C.I. Pigment Yellow 94, C.I. Pigment Yellow 128, C.I. Pigment Yellow 138, C.I. Pigment Yellow 151, C.I. Pigment Yellow 154, C.I. Pigment Yellow 155, C.I. Pigment Yellow 180, C.I. Pigment Yellow 185, and C.I. Pigment Yellow 213.

Examples of red or magenta pigments include Pigment Red 3, 5, 19, 22, 31, 38, 43, 48:1, 48:2, 48:3, 48:4, 48:5, 49:1, 53:1, 57:1, 57:2, 58:4, 63:1, 81, 81:1, 81:2, 81:3, 81:4, 88, 104, 108, 112, 122, 123, 144, 146, 149, 166, 168, 169, 170, 177, 178, 179, 184, 185, 208, 216, 226, and 257, Pigment Violet 3, 19, 23, 29, 30, 37, 50, and 88, and Pigment Orange 13, 16, 20, and 36.

Examples of blue or cyan pigments include Pigment Blue 1, 15, 15:1, 15:2, 15:3, 15:4, 15:6, 16, 17-1, 22, 27, 28, 29, 36, and 60.

Examples of green pigments include Pigment Green 7, 26, 36, and 50. Examples of yellow pigments include Pigment Yellow 1, 3, 12, 13, 14, 17, 34, 35, 37, 55, 74, 81, 83, 93, 94, 95, 97, 108, 109, 110, 137, 138, 139, 153, 154, 155, 157, 166, 167, 168, 180, 185, and 193.

Examples of black pigments include Pigment Black 7, 26, and 28.

Examples of commercially available products of such pigments include Chromofine Yellow 2080, 5900, 5930, AF-1300, and 2700L, Chromofine Orange 3700L and 6730, Chromofine Scarlet 6750, Chromofine Magenta 6880, 6886, 6891N, 6790, and 6887, Chromofine Violet RE, Chromofine Red 6820 and 6830, Chromofine Blue HS-3, 5187, 5108, 5197, 5085N, SR-5020, 5026, 5050, 4920, 4927, 4937, 4824, 4933GN-EP, 4940, 4973, 5205, 5208, 5214, 5221, and 5000P, Chromofine Green 2GN, 2GO, 2G-550D, 5310, 5370, and 6830, Chromofine Black A-1103, Seikafast Yellow 10GH, A-3, 2035, 2054, 2200, 2270, 2300, 2400(B), 2500, 2600, ZAY-260, 2700(B), and 2770, Seikafast Red 8040, C405(F), CA120, LR-116, 1531B, 8060R, 1547, ZAW-262, 1537B, GY, 4R-4016, 3820, 3891, and ZA-215, Seikafast Carmine 6B1476T-7, 1483LT, 3840, and 3870, Seikafast Bordeaux 10B-430, Seikalight Rose R40, Seikalight Violet B800, 7805, Seikafast Maroon 460N, Seikafast Orange 900 and 2900, Seikalight Blue C718, A612, and Cyanine Blue 4933M, 4933GN-EP, 4940, and 4973 (from Dainichiseika Color & Chemicals Mfg. Co., Ltd.);
KET Yellow 401, 402, 403, 404, 405, 406, 416, and 424, KET Orange 501, KET Red 301, 302, 303, 304, 305, 306, 307, 308, 309, 310, 336, 337, 338, and 346, KET Blue 101, 102, 103, 104, 105, 106, 111, 118, and 124, and KET Green 201 (from DIC Corporation);
Colortex Yellow 301, 314, 315, 316, P-624, 314, U10GN, U3GN, UNN, UA-414, and U263, Finecol Yellow T-13 and T-05, Pigment Yellow 1705, Colortex Orange 202, Colortex Red 101, 103, 115, 116, D3B, P-625, 102, H-1024, 105C, UFN, UCN, UBN, U3BN, URN, UGN, UG276, U456, U457, 105C, and USN, Colortex Maroon 601, Colortex Brown B610N, Colortex Violet 600, Pigment Red 122, Colortex Blue 516, 517, 518, 519, A818, P-908, and 510, Colortex Green 402 and 403, and Colortex Black 702 and U905 (from Sanyo Color Works, LTD.);
Lionol Yellow 1405G, Lionol Blue FG7330, FG7350, FG7400G, FG7405G, ES, and ESP-S (from Toyo Ink Co., Ltd.), and Toner Magenta E02, Permanent Rubin F6B, Toner Yellow HG, Permanent Yellow GG-02, and Hostapeam Blue B2G (from Hoechst Industry Limited.);
Novoperm P-HG, Hostaperm Pink E, and Hostaperm Blue B2G (from Clariant); and
Carbon Black #2600, #2400, #2350, #2200, #1000, #990, #980, #970, #960, #950, #850, MCF88, #750, #650, MA600, MA7, MA8, MA11, MA100, MA100R, MA77, #52, #50, #47, #45, #45L, #40, #33, #32, #30, #25, #20, #10, #5, #44, and CF9 (from Mitsubishi Chemical Corporation).

The pigment is preferably further dispersed with a pigment dispersant from the viewpoint of enhancing the dispersibility of the pigment in the ink. The pigment dispersant will be described below.

The pigment may be a self-dispersible pigment. The self-dispersible pigment is obtained by modifying the surface of pigment particles with groups having hydrophilic groups so that the self-dispersible pigment has pigment particles and groups having hydrophilicity bonded to the surface thereof.

Examples of the hydrophilic groups include carboxyl group, sulfonic acid group, and phosphorus-containing groups. Examples of the phosphorus-containing groups include phosphoric group, phosphonic acid group, phosphinic acid group, phosphite group, and phosphate group.

Examples of commercially available self-dispersible pigments include Cab-0-Jet^{™} 200K, 250C, 260M, and 270V (sulfonic acid group-containing self-dispersible pigment), Cab-0-Jet^{™} 300K (carboxylic acid group-containing self-dispersible pigment), and Cab-0-Jet^{™} 400K, 450C, 465M, 470V, and 480V (phosphate group-containing self-dispersible pigment) from Cabot Corporation.

The average particle size d1 of the pigment means the average particle size of the pigment dispersed in the ink, specifically, when the ink contains a pigment dispersant, the average particle size d1 means the average dispersed particle size (Z-average) of the pigment particles with the pigment dispersant adsorbed thereto. The average particle size d1 of the pigment may be any value in a range that does not impair the emission property of the pigment emitted by the inkjet method, but is preferably 50 to 350 nm, and more preferably 70 to 250 nm. The dispersed particle size of a pigment can be measured by a particle size distribution measuring device using dynamic scattering.

The average particle size d1 of the pigment can be adjusted mainly by the size of the pigment particles themselves, but can also be adjusted by the molecular weight and content of the pigment dispersant and the conditions of the dispersion process of the pigment particles.

The content M of the pigment may be any value, but from the viewpoint of adjusting the viscosity of the ink to fall within the range described below and enabling the formation of high density images, the content is preferably 0.3 to 10 mass% with respect to the ink. When the pigment content M1 is 0.3 mass% or more, a large amount of polymer particles can also be contained, so that the color of the obtained image is more likely to become vivid. When the pigment content M1 is 5 mass% or less, the viscosity of the ink does not become too high, so that the emission stability is less likely to be impaired. From the same viewpoint, the pigment content M1 is more preferably 0.5 to 3 mass% with respect to the ink.

### 1-2. Polymer Particle

Polymer particles having a Tg of 50°C or higher mix with the pigment particles to reduce the volume density of the pigment particles and increase the volume of all particles, thereby allowing the pigment particles to be less likely to gather in the gaps between the fibers. Polymer particles having a Tg of 50°C or higher are less likely to fuse to form a film during drying of the ink that is applied to a fabric. The image-formed product is thus less likely to become hard, and the texture of the fabric is less likely to be impaired. From the same viewpoint, the Tg of the polymer particles is more preferably 80 to 150°C. Polymer particles having a Tg of 150°C or lower further reduces the possibility of the impairment of the fixability of the polymer particles and pigment particles to the fabric.

The Tg of polymer particles can be measured by the following method.

First, polymer particles separated from the ink are dried to be used as a sample. This sample is then measured by differential scanning calorimetry at a temperature-raising rate of 10°C/min in accordance with JIS K7121, thereby determining the glass transition temperature (Tg).

The Tg of the polymer particles can be adjusted by, for example, the composition and/or the cross-linking degree of the resin constituting the polymer particles.

The polymer particles are preferably colorless from the viewpoint of reproducing the color of the pigment particles to a high degree. Colorless polymer particles specifically refer to polymer particles that do not have a UV absorption peak at a wavelength of 400 to 700 nm in the absorption spectrum obtained by UV-Vis spectroscopy.

In addition, the polymer particles are preferably translucent, and more preferably transparent. In other words, the polymer particles are particularly preferably colorless and transparent.

Any resin with the Tg satisfying the above range may be used as such polymer particles. The polymer particles preferably include one or more resins selected from the group consisting of, for example, (meth)acrylic resins, polystyrene resins, acrylonitrile resins, urethane resins, polyester resins, and epoxy resins. In particular, from the viewpoint that the Tg is suitably high and the texture is less likely to be impaired, the polymer particles preferably include a resin selected from the group consisting of (meth)acrylic resins and polystyrene resins.

### (Meth)Acrylic resin

The (meth)acrylic resin may be a homopolymer of at least one of (meth)acrylates and (meth)acrylonitrile, or a copolymer of the at least one of (meth)acrylates and (meth)acrylonitrile and another monomer for the copolymerization.

The (meth)acrylate is a monofunctional (meth)acrylate, and examples thereof include methyl (meth)acrylate, ethyl (meth)acrylate, propyl (meth)acrylate, n-butyl (meth)acrylate, isopropyl (meth) acrylate, isobutyl (meth)acrylate, 2-ethylhexyl (meth)acrylate, and n-hexyl (meth) acrylate, and preferably methyl methacrylate. The (meth)acrylonitrile is acrylonitrile or methacryloylnitrile.

The total content of the structural units derived from the (meth)acrylate and the structural units derived from the (meth)acrylonitrile may be 50 mass% or more, preferably 60 mass% or more, based on all the structural units constituting the resin.

The monomer for the copolymerization may be another (additional) monofunctional vinyl monomer or a polyfunctional vinyl monomer (cross-linkable vinyl monomer).

Examples of the additional monofunctional vinyl monomers include ethylenically unsaturated carboxylic acids (for example, (meth)acrylic acid, maleic acid, and itaconic acid), functional group-containing (meth)acrylates (for example, quaternary ammonium group-containing (meth)acrylates such as trimethylammonium ethyl (meth)acrylate, 2-hydroxyethyl (meth)acrylate, 2-hydroxypropyl (meth)acrylate, and glycidyl (meth)acrylate), acrylamides, styrenes (for example, styrene, α-methylstyrene, and vinyl toluene), and saturated fatty acid vinyls (for example, vinyl acetate and vinyl propionate). The content of the structural units derived from the additional monofunctional vinyl monomer(s) may be 50 mass% or less based on all the structural units constituting the resin.

Examples of the polyfunctional vinyl monomer include vinyl compounds (for example, 1,4-divinyloxybutane and divinylbenzene), allyl compounds (for example, diallyl phthalate and triallyl cyanurate), and polyfunctional (meth)acrylates (for example, ethylene glycol di(meth)acrylate, diethylene glycol di(meth)acrylate, propylene glycol di(meth)acrylate, triethylene glycol di(meth)acrylate, trimethylolpropane tri(meth)acrylate, and pentaerythritol tetra(meth)acrylate). The content of the structural units derived from the polyfunctional vinyl monomer(s) may be 20 mass% or less, preferably 0.5 to 10 mass%, based on all the structural units constituting the resin.

From the viewpoint of reducing the possibility for the polymer particles to fuse to each other, the (meth)acrylic resin may be cross-linked (that is, may be a cross-linked (meth)acrylic resin). The cross-linked (meth)acrylic resin is a copolymer of a monofunctional vinyl monomer, including at least one of (meth)acrylates and (meth)acrylonitrile, and a polyfunctional vinyl monomer. Such a cross-linked (meth)acrylic resin is less likely to fuse to form a film during ink drying.

### Polystyrene Resin

The polystyrene resin may be a homopolymer of a styrene or a copolymer of a styrene and another monomer for the copolymerization.

The styrene may be any one of the above described styrenes. The content of the structural units derived from the styrene may be 50 mass% or more, preferably 60 mass% or more, based on all the structural units constituting the resin. The monomer for the copolymerization may be any one of the above described monomers for the copolymerization.

The polystyrene resin may be a cross-linked polystyrene resin. The cross-linked polystyre resin is a copolymer of a monofunctional vinyl monomer, including a styrene, and a polyfunctional vinyl monomer.

In particular, the polymer particles preferably include polymethylmethacrylate (PMMA), polyacrylonitrile (PAN), methacrylate / acrylonitrile copolymer, polystyrene or styrene copolymer.

### Common physical properties

The acid value of the resin (water-dispersible resin) constituting the polymer particles may be of any resin that can be satisfactorily dispersed in a aqueous medium, and for example, 20 to 140 mgKOH/g, preferably 30 to 70 mgKOH/g. The acid value can be measured in accordance with JIS K0070 or ISO3961. Specifically, the acid value can be measured as the number of mg of potassium hydroxide (KOH) required to neutralize 1 g of the sample.

The average particle size d2 of the polymer particles may be any value, but it is preferable that the average particle size d2 is not too small with respect to the average particle size d1 of the pigment particles from the viewpoint of allowing the pigment particles to be less likely to gather in the gaps between the fibers of a fabric. Specifically, the ratio d2/dl between the average particle size d1 of the pigment and the average particle size d2 of the polymer particles is preferably 0.5 to 3, more preferably 1.1 to 2.5.

The average particle size d2 of the polymer particles is preferably, for example, 80 to 400 nm, more preferably 150 to 300 nm. The average particle size d2 of the polymer particles can be measured in the same manner as the average particle size d1 of the pigment particles.

In the ink, the ratio M2/M1 between the polymer particle content M2 and the pigment content M1 is preferably 3 to 19 (mass ratio). A ratio M2/M1 of 3 (mass ratio) or more can reduce the ratio of pigment particles that gather in the gaps between fibers of a fabric when the ink is applied to the fabric. The pigment particles are thus more likely to be distributed uniformly on the surface of fibers, thereby obtaining satisfactory image density. On the other hand, a ratio M2/M1 of 19 (mass ratio) or less does not excessively reduce the percentage of pigment particles in the ink, so the image density is less likely to be reduced, and also does not excessively increase the percentage of polymer particles, so the texture is less likely to be impaired, either. From the same viewpoint, the ratio M2/M1 is preferably 5 to 17 (mass ratio), more preferably 8 to 14 (mass ratio).

Specifically, the content M2 of the polymer particles is preferably 1 to 10 mass%, more preferably 3 to 8 mass%, with respect to the ink. The polymer particles may be used alone or in combination of two or more.

### 1-3. Solvent

Any solvent may be used, but the solvent preferably contains water, and more preferably further contains a water-soluble organic solvent.

Any water-soluble organic solvent which is compatible with water may be used, but from the viewpoints of facilitating the permeation of the ink into a fabric and allowing the emission stability to be less likely to be impaired in an inkjet method, it is preferable that the ink is less likely to thicken due to drying. The ink thus preferably contains a high boiling point solvent having a boiling point of 200°C or higher.

The high boiling point solvent having a boiling point of 200°C or higher may be any water-soluble organic solvent that has a boiling point of 200°C or higher, but is preferably a polyol or a polyalkylene oxide.

Examples of the polyol having a boiling point of 200°C or higher include dihydric alcohols such as 1,3-butanediol (boiling point 208°C), 1,6-hexanediol (boiling point 223°C), and polypropylene glycol; and trihydric or higher alcohols such as glycerin (boiling point 290°C) and trimethylolpropane (boiling point 295°C).

Examples of the polyalkylene oxide having a boiling point of 200°C or higher include diethylene glycol monoethyl ether (boiling point 202°C), triethylene glycol monomethyl ether (boiling point 245°C), tetraethylene glycol monomethyl ether (boiling point 305°C), tripropylene glycol monoethyl ether (boiling point 256°C), ethers of divalent alcohols such as polypropylene glycol, and ethers of trihydric or higher alcohols such as glycerin (boiling point 290°C) and hexanetriol.

The solvent may contain an additional solvent other than the above-described high boiling point solvent. Examples of the additional solvent include polyhydric alcohols having a boiling point of less than 200°C (for example, ethylene glycol, propylene glycol, and hexanetriol); polyhydric alcohol ethers having a boiling point of less than 200°C (for example, ethylene glycol monomethyl ether, ethylene glycol monobutyl ether, diethylene glycol monomethyl ether, diethylene glycol dimethyl ether, propylene glycol monomethyl ether, and propylene glycol monoethyl ether); monohydric alcohols (for example, methanol, ethanol, propanol, pentanol, hexanol, cyclohexanol, and benzyl alcohol); amines (for example, ethanolamine, N-ethyldiethanolamine, morpholine, N-ethylmorpholine, ethylenediamine, diethylenediamine, and triethylenetetramine); amides (for example, formamide, N,N-dimethylformamide, and N,N-dimethylacetamide); heterocycles (for example, 2-pyrrolidone, N-methyl-2-pyrrolidone, N-cyclohexyl-2-pyrrolidone, 2-oxazoridone, and 1,3-dimethyl-2-imidazolidine); sulfoxides (for example, dimethyl sulfoxide); and sulfones (for example, sulfolane).

### 1-4. Additional Components

The inkjet textile printing ink may additionally contain other components, as necessary. Examples of the additional components may include pigment dispersants, surfactants, preservatives, antifungal agents, and pH adjusters.

### Pigment Dispersant

A pigment dispersant surrounds the surface of the pigment particles in the ink or is adsorbed on the surface of the pigment particles to form a pigment dispersion in the ink, thereby satisfactorily dispersing the pigment. The pigment dispersant is preferably a polymeric dispersant from the viewpoint of excellent dispersibility of the pigment.

Examples of the polymeric dispersant include anionic dispersants and cationic dispersants.

The anionic dispersant may be a polymeric dispersant having a hydrophilic group selected from the group consisting of a carboxylic acid group, a phosphorus-containing group and a sulfonic acid group. In particular, a polymeric dispersant having a carboxylic acid group is preferred.

Examples of the polymeric dispersants having a carboxylic acid group include polycarboxylic acids and salts thereof. Examples of the polycarboxylic acids include (co)polymers of a monomer selected from acrylic acid or derivatives thereof, maleic acid or derivatives thereof, itaconic acid or derivatives thereof, and fumaric acid or derivatives thereof, and salts of the (co)polymers. Examples of other monomers constituting the copolymer include styrene and vinylnaphthalene.

The anionic group equivalent of the anionic dispersant may be any value such that the pigment particles can be sufficiently dispersed, but is preferably, for example, 1.1 to 3.8 meq/g. An anionic group equivalent within the above range is more likely to allow for high pigment dispersibility without increasing the molecular weight of the anionic dispersant. The anionic group equivalent may be measured in the same manner as the acid value.

Examples of the cationic group in the cationic dispersant may include secondary amino groups (imino group), tertiary amino groups, and quaternary ammonium groups. Any cationic dispersant capable of forming the above pigment dispersion may be used. The cationic dispersant may be, for example, a cationic polymer (polymer or prepolymer).

Examples of the cationic polymer include (co)polymers of ethylenically unsaturated monomers having a cationic group (tertiary amino group or quaternary ammonium group).

Examples of the ethylenically unsaturated monomers having a tertiary amino group include dialkylaminoalkyl (meth)acrylates such as dimethyl- or diethylaminoethyl (meth)acrylate and dimethyl- or diethylaminopropyl (meth)acrylate; dialkylaminoalkyl (meth)acrylamides such as dimethyl- or diethylaminoethyl (meth)acrylamide and dimethyl- or diethylaminopropyl (meth)acrylamide; and (meth)acrylamides such as acrylamide.

Examples of the ethylenically unsaturated monomers having a quaternary ammonium group include (meth)acryloyloxyalkyltrialkylammonium salts such as 2-(meth)acryloyloxyethyltrimethylammonium chloride and 3-(meth)acryloyloxy-2-hydroxypropyltrimethylammonium chloride; (meth)acrylamide alkyltrialkylammonium salts such as acrylamide-2-(acryloyloxy)methyltrimethylammonium chloride, (3-(meth)acrylamidepropyltrimethylammonium chloride, and 3-(meth)acryloylamino-2-hydroxypropyltrimethylammonium chloride); 2- (meth) acryloyloxyalkylbenzylammonium salts such as 2-(meth)acryloyloxyethylbenzylammonium chloride and 2- (meth) acryloyloxyethyldimethylbenzylammonium chloride; and dialkyl diallyl ammonium salts such as dimethyl diallyl ammonium chloride.

The ethylenically unsaturated monomers having a cationic group may be used alone or in combination of two or more. For example, an ethylenically unsaturated monomer having a tertiary amino group and an ethylenically unsaturated monomer having a quaternary ammonium group may be copolymerized.

Further, the ethylenically unsaturated monomer having a cationic group may be copolymerized with another monomer. Examples of the other monomers include (meth)acrylic acid and esters thereof, allyl ethers, vinyl ethers, aromatic vinyl monomers, vinyl ester monomers, olefin monomers, and diene monomers.

Examples of such cationic polymers include dimethylaminoethyl methacrylate polymer, methacrylate-2-dimethylaminoethyl methacrylate copolymer, butyl acrylate-dimethylaminoethyl methacrylate copolymer, acrylamide-2-(acryloyloxy) methyltrimethylammonium chloride polymer, and dimethyldiallylammonium chloride / acrylamide copolymer.

The cationic group equivalent of the cationic dispersant may be any value such that the pigment particles can be sufficiently dispersed, but is preferably, for example, 1 to 5 meq/g. A cationic group equivalent within the above range is more likely to allow for high pigment dispersibility without increasing the molecular weight of the cationic dispersant. The cationic group equivalent may be measured in the same manner as an amine value.

In particular, the pigment dispersant in the pigment ink is preferably a cationic dispersant from the viewpoint of eliminating the cationic pretreatment that may cause dirt or stains and allowing the color reproducibility to continue for a longer period of time.

The weight average molecular weight of the polymeric dispersant may be any value, but is preferably 5,000 to 30,000. A polymeric dispersant having a weight average molecular weight of 5,000 or more is more likely to sufficiently disperse the pigment particles. A polymeric dispersant having a weight average molecular weight of 30,000 or less allows the ink to be not excessively thicken, so that the permeability to the fabric is less likely to be impaired. The weight average molecular weight of the polymeric dispersant can be measured in terms of polystyrene by gel permeation chromatography.

The content of the polymeric dispersant may be any value in a range such that pigment particles are sufficiently dispersed the and the polymeric dispersant has a viscosity that does not impair the permeability to the fabric, but is preferably 20 to 100 mass%, more preferably 25 to 60 mass%, with respect to the pigment.

### Surfactant

The inkjet textile printing ink may additionally contain a surfactant as necessary.

Surfactants can reduce the surface tension of an ink and increase the wettability of the ink to the fabric. Any type of surfactant may be used, but for example, any one of acetylene glycol-based surfactants, silicone-based surfactants, and fluorine-based surfactants may be used.

### Preservative and Antifungal Agent

Examples of the preservative or the antifungal agent include aromatic halogen compounds (such as Preventol CMK), methylene diisocyanate, halogen-containing nitrogen-sulfur compounds, and 1,2-benzisothiazolin-3-one (such as PROXEL GXL).

### pH Adjuster

Examples of the pH adjuster include citric acid, sodium citrate, hydrochloric acid, and sodium hydroxide.

### 1-5. Physical Properties

The viscosity of the ink at 25°C may be any value such that the emission property by the inkjet method becomes satisfactory, but is preferably 3 to 20 mPa·s, and more preferably 4 to 12 mPa·s. The viscosity of the ink can be measured by an E-type viscometer at 25°C.

### 1-6. Preparation of Ink

The ink of the present invention may be produced by any method. For example, the ink of the present invention may be produced by the steps of 1) mixing a pigment, a pigment dispersant, and a solvent (such as water) to obtain a pigment dispersion liquid, and 2) further mixing the obtained pigment dispersion liquid with a dispersion liquid containing polymer particles and another optional component (such as a surfactant and/or high-boiling point solvent). An ink in which the pigment is satisfactorily dispersed is readily obtained by such a method.

### 2. Image Forming Method

An image forming method of the present invention includes a step of applying a droplet of the ink of the present invention to a fabric by an inkjet method.

Specifically, the image forming method of the present invention includes steps of 1) ejecting the ink from an inkjet recording head to apply droplets of the ink on a fabric (ink applying step) and 2) a drying and fixing the ink applied to the fabric (drying and fixing step).

### Step 1 (Ink Applying Step)

In the step, the ink is ejected from an inkjet recording head to apply droplets of the ink on a fabric.

The fiber material constituting the fabric may be of any type, and preferably contains natural fibers such as cotton (cellulose fiber), linen, wool, or silk; and/or chemical fibers such as rayon, vinylon, nylon, acryl, polyurethane, polyester, or acetate. The fabric may be in any form of these fibers, such as a woven fabric, a non-woven fabric, or a knitted fabric. The fabric may be a blended woven fabric or blended non-woven fabric of two or more types of fibers.

For example, when the ink contains an anionic dispersant, the fabric preferably has a cationic group or an acid group at least on the surface thereof from the viewpoint of increasing the adsorption rate and fixability of the pigment. The fabric having a cationic group or an acid group at least on the surface thereof may be a pretreated fabric or a non-pretreated fabric.

When the ink contains a cationic dispersant, the fabric preferably has an anionic group at least on the surface thereof from the viewpoint of increasing the adsorption rate and fixability of the pigment. That is, a fabric containing fibers having anionic groups (for example, cotton or polyester with anionic groups) does not necessarily need to be pretreated for imparting anionic groups, since the fabric already has anionic groups. On the other hand, it is preferable to impart anionic groups by pretreatment for a fabric that does not contain fibers with anionic groups because such a fabric has no anionic group without any pretreatment.

In the present invention, the polymer particles in the ink gather in the gaps between fibers to some extent, thus the pigment particles are less likely to gather in excess in the gaps between fibers and are more likely to be distributed uniformly on the surface of the fibers during the application of the ink (see FIG. IB).

### Step 2 (Drying and Fixing Step)

In the drying step, the ink applied to the fabric is dried to remove the solvent component in the ink, thereby fixing the pigment to the fabric.

The drying method may be any method, such as a method using a heater, a hot air dryer, or a heat roller. In particular, it is preferable to heat both sides of the fabric to dry the fabric by using a hot air dryer and a heater.

The drying temperature and drying time are preferably set in such a way that the polymer particles do not form a film while the solvent component in the ink is evaporated. Specifically, the drying temperature is preferably (Tg + 50)°C (where Tg is the Tg of polymer particles) or less. The drying temperature may be room temperature. The drying time depends on the drying temperature, but may be, for example, about 0.5 to 30 minutes.

The Tg of the polymer particles applied to the fabric is suitably high in the present invention, thus the polymer particles are less likely to fuse together excessively, and less likely to form a film during drying of the ink. Therefore, as the fibers do not adhere to each other thus not close the gaps therebetween, the image-formed product is less likely to become hard (see, FIG. IB).

The image forming method of the present invention may further include a step of 3) pretreating a fabric (pretreatment step), as necessary.

### Step 3 (Pretreatment Step)

In the pretreatment step, a pretreatment agent is applied to the fabric.

The pretreatment agent may be of any type and may be selected in accordance with the composition of the ink. For example, when the ink contains an anionic dispersant, the pretreatment agent preferably contains a compound having an acid group or a cationic group. When the ink contains a cationic dispersant, the pretreatment agent is preferably an anionic pretreatment agent containing a compound having an anionic group.

The compound having an anionic group may be any compound, and may be the same as an anionic surfactant, or may be a polymer compound having an anionic group or the like. Examples of the polymer compound having an anionic group include outer part of plant such as pectic acid, fibrous derivatives such as carboxymethyl cellulose, processed starches such as carboxymethyl starch and carboxyethyl starch, and synthetic glues such as acrylic polymers containing acrylic acid as a copolymerization component, such as acrylic acid / acrylate copolymers and styrene / acrylic acid copolymers.

The pretreatment agent may further contain a pH adjuster, a preservative, and/or the like, as necessary. As the preservative, any one of the preservatives described as the preservatives for the inkjet textile printing ink can be used.

Any method for applying the pretreatment agent to a fabric, such as a pad method, a coating method, a spray method, or an inkjet method, may be used.

The pretreatment agent applied to the fabric may be heated and dried by using hot air, a hot plate, or a heat roller.

From the viewpoint of facilitating the obtainment of a uniform image, washing may be performed before the application of the pretreatment agent to the fabric for removing natural impurities (such as oils and fats, waxes, pectic substances and natural pigments) adhering to the fabric fibers, residues of chemicals used in the fabric production process remaining to the fabric (such as glue), and dirt adhering to the fabric.

The obtained image-formed product includes a fabric and an image layer disposed on the surface of the fabric. The image layer contains the dried material of an ink containing pigment particles and polymer particles. In the dried material of the ink, most of the polymer particles do not form a film, but retain the particle shape and the fibers of the fabric adhere to each other at least in part. As a result, the image-formed product is less likely to become hard, and the texture of the fabric can be satisfactorily maintained.

### Examples

Hereinafter, the present invention will be specifically described with reference to Examples, but the present invention is not limited thereto.

### Example 1

### 1. Materials of Ink

### (1) Preparation of Anionic Pigment Dispersion Liquid

### Preparation of Anionic Pigment Dispersion Liquid 1

After mixing 7 parts by mass of styrene / butyl acrylate / methacrylate copolymer (anionic dispersant, weight average molecular weight 16,000, anionic group equivalent 3.5 meq/g) as a pigment dispersant with 78 parts by mass of water, the mixture was heated and stirred to prepare a neutralized product of the pigment dispersant. To this mixture, 15 parts by mass of C.I. Pigment Blue 15:3 was added, and the mixture was pre-mixed and dispersed by using a sand grinder filled with 0.5 mm zirconia beads at a volume fraction of 50% to obtain a cyan pigment dispersion liquid having a pigment concentration of 15 mass%.

### Preparation of Anionic Pigment Dispersion Liquid 2

A cyan pigment dispersion liquid having a pigment concentration of 15 mass% was obtained in the same manner as described above except that C.I. Pigment Red 122 was used as the pigment.

The average particle size d1 of the pigment in the pigment dispersion liquid was measured by the following method.

### Measurement of Average Particle Size d1 of Pigment

The average dispersed particle size (Z-average) of the pigment in the obtained pigment dispersion liquid was measured by Zetasizer Nano S90 (from Malvern Panalytical) and was identified as the average particle size d1.

### (2) Preparation of Polymer Particle Dispersion Liquid

### Preparation of PMMA Particle Dispersion Liquids A1 to A3

In a three-necked flask, 50 g of methyl methacrylate, 5 g of methacrylic acid, 1 g of ethylene glycol dimethacrylate, and 0.5 g of the polymerization initiator AIBN were mixed, and 500 mL of water was added. The mixture was dispersed with ultrasonic waves, and then polymerized under a nitrogen stream. The mixture was then neutralized and concentrated by ultrafiltration, and coarse particles were removed by centrifugation, thereby obtaining a dispersion liquid of PMMA particles (cross-linked particles) having a solid content of 20 mass%.

The Tg of the PMMA particles of the obtained PMMA particle dispersion liquids A1 to A3 was 100°C, the average particle size of the dispersion liquid A1 was 210 nm, the average particle size of the dispersion liquid A2 was 430 nm, and the average particle size of the dispersion liquid A3 was 460 nm.

### Preparation of PMMA Particle Dispersion Liquid A4

A dispersion liquid of PMMA particles (non-cross-linked particles) having a solid content of 20 mass% was obtained by polymerization and concentration by ultrafiltration in the same manner as the preparation method for PMMA particle dispersion liquid 1 above, except that ethylene glycol dimethacrylate was not added.

### PAN Particle Dispersion Liquid

Aqueous dispersion liquid of polyacrylonitrile particles (Tg: 104°C, average particle size: 180 nm)

### Polystyrene Particle Dispersion Liquid 1

Polystyrene particle dispersion liquid 1 (Tg: 95°C, average particle size: 280 nm) was obtained in the same manner as the polymer dispersion liquid A1 except that styrene was used in place of methyl methacrylate.

### St-Ac copolymer (styrene / acrylic copolymer) dispersion liquid

Aqueous dispersion liquid of styrene / methylmethacrylate / butyl methacrylate copolymer (monomer ratio: 5/4/1 (mass ratio), Tg: 90°C, average particle size: 220 nm)

### Polyurethane Particle Dispersion Liquid 1

Superflex 860 (from DKS Co. Ltd., Tg: 36°C, average particle size: 200 nm)

### Polyurethane Particle Dispersion Liquid 2

Superflex 870 (from DKS Co. Ltd., Tg: 78°C, average particle size: 30 nm)

The Tg of polymer particles was measured by the following method.

### Glass Transition Temperature (Tg)

Polymer particles were collected from each polymer particle dispersion liquid, and the dried sample was measured by the differential scanning calorimetry to determine the glass transition temperature. The measurement was performed under the conditions described above.

### Average Particle Size d2

The dispersed particle size (Z-average) of the polymer particles in the polymer particle dispersion liquid was measured by Zetasizer Nano S90 (from Malvern Panalytical) and was identified as the average particle size d2.

These polymer particles did not have a UV absorption peak at a wavelength of 400 to 700 nm in the absorption spectrum obtained by UV-Vis spectroscopy.

### (3) Additional Components

OLFINE E1010 (from Nissin Chemical Industry Co. Ltd., acetylene glycol-based surfactant)

### Proxel GXL (from LONZA Japan, preservative)

### Ethylene Glycol

Propylene Glycol
Glycerin

### 2. Preparation of Ink and Evaluation

Preparation of Ink 1
Preparation of Ink
Ink 1 was obtained by mixing the following components to make a total of 100 mass parts.
Anionic pigment dispersion liquid 1 (15 mass% of pigment concentration): 6.7 parts by mass (1 part by mass of solid content)
PMMA particle dispersion liquid A1 (20 mass% of solid content concentration): 45 parts by mass (9 parts by mass of solid content)
Ethylene glycol: 20 parts by mass
Propylene glycol: 5 parts by mass
Glycerin: 5 parts by mass
OLFINE E1010 (from Nissin Chemical Industry Co. Ltd., acetylene glycol-based surfactant): 0.1 part by mass
Proxel GXL (from LONZA Japan): 0.1 part by mass
Ion exchange water: balance

The dispersed particle size of polymer particles in the obtained ink was substantially the same as the dispersed particle size of the polymer particles in the polymer particle dispersion, and the dispersed particle size of pigment particles in the ink was substantially the same as the dispersed particle size of the pigment particles in the pigment dispersion liquid.

### Preparation of Inks 2 to 16

Inks 2 to 16 were similarly obtained by mixing the components to have the respective compositions shown in Table 1.

### Image Formation Test

An image formation test was performed by using each of the obtained inks 1 to 16.

An inkjet head (printhead # 204 from Konica Minolta, Inc.) was prepared as an image forming apparatus. Each ink shown in Table 1 was ejected from the nozzle of the inkjet head of the image forming apparatus to form an image on cotton cloth (as the fabric). Specifically, image formation was performed by the following procedure.

### Ink Applying Step

The obtained ink was placed in the image forming apparatus. A solid image was formed on the fabric by using the obtained ink by a main scan of 540 dpi × a sub scan of 720 dpi. The "dpi" represents the number of ink droplets (dots) per 2.54 cm. The ejection frequency was 22.4 kHz.

### Drying Step

The fabric with the ink applied thereon was dried at 120°C for 5 minutes in a conveyor belt dryer.

### Evaluation

The following methods were used to evaluate the emission stability (emission property), color reproducibility and texture of the obtained image-formed product when the image formation test was performed by using each ink.

### Emission Stability

The obtained image-formed product was visually observed to evaluate the emission stability of the image based on the following evaluation criteria.
Good: The image was not blurred and appears uniform.
Fair: A part of the image was blurred.
Poor: Many parts of the image were blurred.

When the evaluation was "Fair" or better, the emission stability was evaluated as in an allowable range.

### Color Reproducibility

The obtained image-formed product was visually observed to evaluate the color reproducibility. The evaluation was made visually based on the following criteria.
Excellent: Excellent color density and color vividness
Good: Slightly lighter color density or slightly inferior color vividness, but at a satisfactory level
Fair: A little light color density or a little inferior color vividness, but at a level posing no problem in practical use
Poor: Substantially light color density or dull color at a level posing a problem in practical use

When the evaluation was "Fair" or better, the color reproducibility was evaluated as in an allowable range.

### Texture

The texture of an obtained image-formed product and fabric was evaluated sensorily by touching the object with fingers. The evaluation was made based on the following evaluation criteria.
Excellent: Original softness of the fabric was maintained.
Good: The original softness of the fabric was slightly lost and the fabric became hard, but the texture of the fabric was not impaired.
Fair: The original softness of the fabric was lost and the fabric became hard, but the texture of the fabric was maintained.
Poor: The fabric became harder than the original fabric, and the texture of the fabric was impaired.

When the evaluation was "Fair" or better, the texture was evaluated as in an allowable range.

Table 1 shows the evaluation results of inks I to 16.

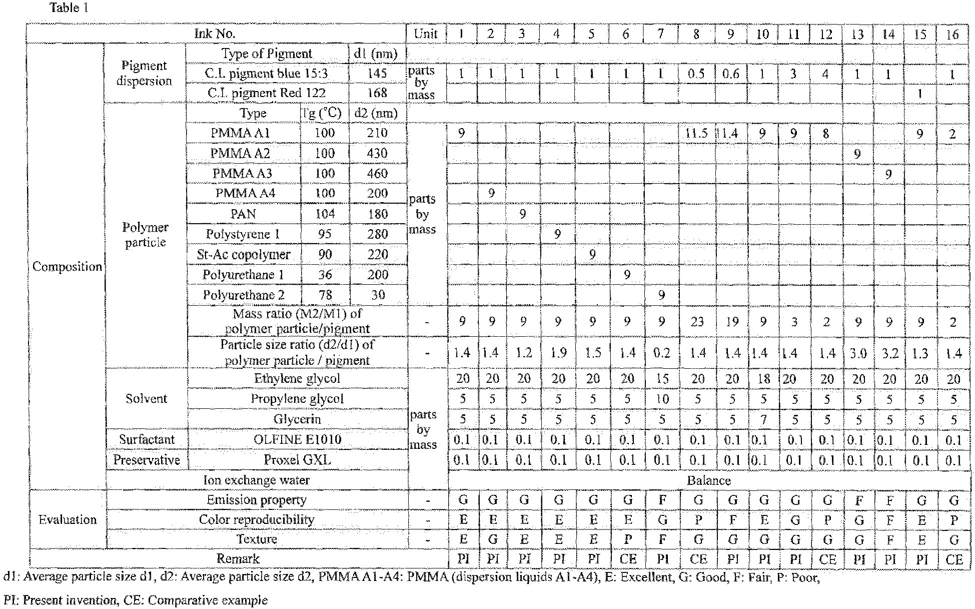

Table 1 shows that using inks 1 to 7, 9 to 11, and 13 to 15, which contain polymer particles having a Tg of 50°C or higher and have the ratio (M2/M1) between the polymer particle content M2 and the pigment content M1 of 3 to 19 (mass ratio), allows uniform formation of a high-density image on the surface of a fabric without impairing the texture of the fabric, and also allows satisfactory color reproducibility. In addition, the emission stability (emission property) can be maintained when using the above inks.

Using inks 12 and 16, which have the ratio (M2/M1) between the polymer particle content M2 and the pigment content M1 of less than 3 (mass ratio), could not obtain sufficiently high image density and could obtain only low color reproducibility. Table 1 also shows that in ink 8, which has the ratio (M2/M1) higher than 19 (mass ratio), the content of polymer particles is increased and the ratio of the pigment particle content becomes too low, resulting in an overall decrease in image density. The image-formed product obtained from ink 6, which contains polymer particles having a Tg of less than 50°C, obviously has inferior texture. The reason for the inferior texture may be because polymer particles having a Tg of less than 50°C formed a film during drying, resulting in a hardened image-formed product.

### Example 2

### 1. Materials of Ink

### (1) Preparation of Cationic Pigment Dispersion Liquid

### Preparation of Cationic Pigment Dispersion Liquid 1

After mixing 7 parts by mass of butyl acrylate / dimethylaminoethyl methacrylate copolymer (cationic dispersant, weight average molecular weight 16,000, cationic group equivalent 4.4 meq/g) as a pigment dispersant with 78 parts by mass of water, the mixture was heated and stirred to prepare a neutralized product of the pigment dispersant. To this mixture, 15 parts by mass of C.I. Pigment Blue 15:3 was added, and the mixture was pre-mixed and dispersed by using a sand grinder filled with 0.5 mm zirconia beads at a volume fraction of 50% to obtain a cyan pigment dispersion liquid having a pigment concentration of 15 mass%.

### Preparation of Cationic Pigment Dispersion Liquid 2

A cyan pigment dispersion liquid having a pigment concentration of 15 mass% was obtained in the same manner as described above except that C.I. Pigment Red 122 was used as the pigment.

The average particle size d1 of the pigment in each obtained pigment dispersion liquid was measured by the same method as described above.

### (2) Preparation of Polymer Particle Dispersion Liquid

### Preparation of PMMA Particle Dispersion Liquids C1 to C3

In a three-necked flask, 50 g of methyl methacrylate, 5 g of trimethylammonium ethyl methacrylate, 1 g of ethylene glycol dimethacrylate, and 0.5 g of the polymerization initiator AIBN were mixed, and 500 mL of water was added. The mixture was dispersed with ultrasonic waves, and then polymerized under a nitrogen stream. The mixture was concentrated by ultrafiltration to obtain a dispersion liquid of PMMA particles (cross-linked particles having cationic groups) having a solid content of 20 mass%. The polymerization time was adjusted to obtain the average particle size d2 shown in Table 2.

### Polystyrene Particle Dispersion Liquid 2

Aqueous polystyrene particle dispersion liquid 2 (Tg: 100°C, average particle size: 180 nm) was obtained in the same manner as the PMMA particle dispersion liquid C1 except that styrene was used in place of methyl methacrylate.

### Polyurethane Particle Dispersion Liquid 3

Superflex 620 (from DKS Co. Ltd., Tg: 43°C, average particle size: 20 nm)

### Polyurethane Particle Dispersion Liquid 4

Superflex E4800 (from DKS Co. Ltd., Tg: -65°C, average particle size: 300 nm)

### 2. Preparation of Ink

### Preparation of Ink 17

Ink 17 was obtained by mixing the following components to make a total of 100 mass parts.
Cationic pigment dispersion liquid 1 (15 mass% of pigment concentration): 6.7 parts by mass (1 part by mass of solid content)
PMMA particle dispersion liquid C1 (20 mass% of solid content concentration): 45 parts by mass (9 parts by mass of solid content)
Ethylene glycol: 20 parts by mass
Propylene glycol: 5 parts by mass
Glycerin: 5 parts by mass
OLFINE E1010 (from Nissin Chemical Industry Co. Ltd., acetylene glycol-based surfactant): 0.1 part by mass
Proxel GXL (from LONZA Japan): 0.1 part by mass
Ion exchange water: balance

### Preparation of Inks 18 to 30

Inks 18 to 30 were similarly obtained by mixing the components to have the respective compositions shown in Table 2.

### Image Formation Test and Evaluation

Using the obtained inks 17 to 30, image formation tests were performed in the same manner as described above, and the same evaluations (emission stability (emission property), color reproducibility, and texture of the obtained image-formed product) were performed in the same manner as described above. Table 2 shows the results.

**Table 2**

| Ink No. | | | | | Unit | 17 | 18 | 19 | 20 | 21 | 22 | 23 | 24 | 25 | 26 | 27 | 28 | 29 | 30 |
|---|---|---|---|---|---|---|---|---|---|---|---|---|---|---|---|---|---|---|---|
| Composition | Pigment dispersion | Type of Pigment | | d1 (nm) | | | | | | | | | | | | | | | |
| | | C.I. pigment blue 15:3 | | 165 | parts mass | 1 | 1 | 1 | 1 | 1 | 0.5 | 0.6 | 1 | 3 | 4 | 1 | 1 | | 1 |
| | | C.I. pigment | Red 122 | 200 | | | | | | | | | | | | | | 1 | |
| | Polymer particle | Type | Tg (°C) | d2(nm) | | | | | | | | | | | | | | | |
| | | PMMA C1 | 100 | 230 | parts by mass | 9 | ' | | | | 11.5 | 11.4 | 9 | 9 | 8 | | | 9 | 2 |
| | | PMMA C2 | 100 | 470 | | | | | | | | | | | | 9 | | | |
| | | PMMA C3 | 100 | 510 | | | | | | | | | | | | | 9 | | |
| | | PAN | 104 | 220 | | | 9 | | | | | | | | | | | | |
| | | Polystyrene 2 | 95 | 180 | | | | 9 | | | | | | | | | | | |
| | | Polyurethane 3 (SF620) | 43 | 20 | | | | | 9 | | | | | | | | | | |
| | | Polyurethane 4 (E4800) | -65 | 300 | | | | | | 9 | | | | | | | | | |
| | | Mass ratio (M2/M1) of polvmer particle / pigment | | | - | 9 | 9 | 9 | 9 | 9 | 23 | 19 | 9 | 3 | 2 | 9 | 9 | 9 | 2 |
| | | Particle size ratio (d2/d1) of polymer particle / pigment | | | - | 1.4 | 1.3 | 1.1 | 0.1 | 1.8 | 1.4 | 1.4 | 1.4 | 1.4 | 1.4 | 2.8 | 3.1 | 1.3 | 1.4 |
| | | Ethylene glycol | | | parts by mass | 20 | 20 | 20 | 20 | 15 | 20 | 20 | 18 | 20 | 20 | 20 | 20 | 20 | 20 |
| | Solvent | Propylene glycol | | | | 5 | 5 | 5 | 5 | 10 | 5 | 5 | 5 | 5 | 5 | 5 | 5 | 5 | 5 |
| | | Glycerin | | | | 5 | 5 | 5 | 5 | 5 | 5 | 5 | 7 | 5 | 5 | 5 | 5 | 5 | 5 |
| | Surfactant | OLFINE E1010 | | | | 0.1 | 0.1 | 0.1 | 0.1 | 0.1 | 0.1 | 0.1 | 0.1 | 0.1 | 0.1 | 0.1 | 0.1 | 0.1 | 0.1 |
| | Preservative | Proxel GXL | | | | 0.1 | 0.1 | 0.1 | 0.1 | 0.1 | 0.1 | 0.1 | 0.1 | 0.1 | 0.1 | 0.1 | 0.1 | 0.1 | 0.1 |
| | Ion exchange water | | | | | Balance | | | | | | | | | | | | | |
| Evaluation | Emission property | | | | - | G | G | G | G | P | G | G | G | G | F | G | F | G | G |
| | Color reproducibility | | | | - | E | E | E | E | E | P | F | E | G | P | G | F | E | P |
| | Texture | | | | - | G | E | E | P | P | F | G | G | G | G | G | G | E | F |
| Remark | | | | | | PI | PI | PI | CE | CE | CE | PI | PI | PI | CE | PI | PI | PI | CE |

| | | | | | | | | | | | | | | | | | | | |
|---|---|---|---|---|---|---|---|---|---|---|---|---|---|---|---|---|---|---|---|
| d1: Average particle size d1, d2: Average particle size d2, PMMA C1-C3: PMMA (dispersion liquids C1-C3), E: Excellent, G: Good, F: Fair, P: Poor, PI: Present invention, CE: Comparative example | | | | | | | | | | | | | | | | | | | |

Table 2 shows that using inks 17 to 19, 23 to 25, and 27 to 29, which contain polymer particles having a Tg of 50°C or higher and have the ratio (M2/M1) between the polymer particle content M2 and the pigment content M1 of 3 to 19 (mass ratio), allows uniform formation of a high-density image on the surface of a fabric without impairing the texture of the fabric, and also allows satisfactory color reproducibility. In addition, the emission stability (emission property) can be maintained when using the above inks.

Using inks 26 and 30, which have the ratio (M2/M1) between the polymer particle content M2 and the pigment content M1 of less than 3 (mass ratio), could not obtain sufficiently high image density and could obtain only low color reproducibility. Table 2 also shows that in ink 22, which has the ratio (M2/M1) higher than 19 (mass ratio), the content of polymer particles is increased and the ratio of the pigment particle content becomes too low, resulting in an overall decrease in image density.

### Industrial Applicability

The present invention provides an inkjet textile printing ink capable of forming an image having sufficient density without impairing the texture of a fabric.

Although embodiments of the present invention have been described and illustrated in detail, it is clearly understood that the same is by way of illustration and example only and not limitation, the scope of the present invention should be interpreted by terms of the appended claims.

### Reference Signs List

- 10: Fiber (of fabric)
- 11: Pigment particle
- 12: Polymer particle.

## Claims

1. An inkjet textile printing ink, comprising:
a pigment (11) ; a polymer particle (12) having a glass transition temperature of 50°C or higher; and water, wherein
a ratio between a content M1 of the pigment (11) and a content M2 of the polymer particle (12) (the ratio M2/M1) is 3 to 19 at mass ratio.

2. The inkjet textile printing ink according to claim 1, wherein:
the polymer particle (12) is colorless.

3. The inkjet textile printing ink according to claim 1 or 2, wherein:
a ratio between an average particle size d1 of the pigment (11) and an average particle size d2 of the polymer particle (12) (the ratio d2/d1) is 0.5 to 3 in the inkjet textile printing ink.

4. The inkjet textile printing ink according to claim 3, wherein:
the ratio d2/d1 is 1.1 to 2.5.

5. The inkjet textile printing ink according to any one of claims 1 to 4, wherein:
the polymer particle (12) includes a resin selected from the group consisting of (meth)acrylic resins and styrene resins.

6. The inkjet textile printing ink according to claim 5, wherein:
a part of the resin is cross-linked.

7. The inkjet textile printing ink according to any one of claims 1 to 6, wherein:
an average particle size d2 of the polymer particle (12) is 80 to 400 nm.

8. An image forming method, comprising:
applying a droplet of the inkjet textile printing ink according to any one of claims 1 to 7 to a fabric by an inkjet method.
